# EUROPEAN PATENT APPLICATION

(11) **EP 4 292 419 A1**
(43) Date of publication of application: **20.12.2023**
(21) Application number: 23177497.7
(22) Date of filing: 06.06.2023
(51) Int. Cl.: A01D 34/00, G06F 3/048

(54) **DISPLAY FOR CONTROLLING AND MONITORING A ROBOTIC GARDEN TOOL**

(30) Priority: 13.06.2022 US 202263351699 P
(71) Applicant: Techtronic Cordless GP, Anderson, SC 29621 (US)
(72) Inventor: LEE, Chi Chau, Kwai Chung (HK)
(74) Representative: Novagraaf Group

(57) **Abstract**

An external device may include a display and a device network interface configured to allow the external device to wirelessly communicate with one or more robotic garden tools. The external device may be configured to display a home screen on the display. The home screen may include information related to a first robotic garden tool of the one or more robotic garden tools. The home screen may include a first display area that includes a work overview of scheduled work to be performed by the first robotic garden tool. The home screen may also include a second display area that includes a current status of the first robotic garden tool and a plurality of user-selectable inputs configured to alter the current status of the first robotic garden tool in response to being selected via a user input.

## Description

### RELATED APPLICATIONS

The application claims priority to U.S. Provisional Application No. 63/351,699, filed on June 13, 2022 (Attorney Docket No.: 206737-9057-US01), the entire contents of which are hereby incorporated by reference.

### FIELD

The present disclosure relates to robotic garden tools, particularly to display for controlling and monitoring a robotic garden tool.

### SUMMARY

One embodiment includes an external device that may include a display and a device network interface configured to allow the external device to wirelessly communicate with one or more robotic garden tools. The external device may also include an electronic processor coupled to the display and to the device network interface. The electronic processor may be configured to communicate with the one or more robotic garden tools via the device network interface. The electronic processor may be further configured to display a home screen on the display. The home screen may include information related to a first robotic garden tool of the one or more robotic garden tools. The home screen may include a first display area that includes a work overview of scheduled work to be performed by the first robotic garden tool. The home screen may also include a second display area that includes a current status of the first robotic garden tool and a plurality of user-selectable inputs configured to alter the current status of the first robotic garden tool in response to being selected via a user input.

In addition to any combination of features described above, the first display area may be located above the second display area.

In addition to any combination of features described above, the first display area may list a plurality of days including a current day, and the first display area may list a respective work schedule of the first robotic garden tool corresponding to each day of the plurality of days.

In addition to any combination of features described above, the respective work schedule may include one or more time blocks during which the first robotic garden tool one of (i) is scheduled to operate, (ii) is currently operating, or (iii) was scheduled to operate.

In addition to any combination of features described above, each time block may include a status indicator that indicates one of (i) that future work by the first robotic garden tool is scheduled, (ii) whether current scheduled work is being performed by the first robotic garden tool, and (iii) whether past scheduled work was actually performed by the first robotic garden tool.

In addition to any combination of features described above, a total work time of the first robotic garden tool for each day may be listed with respect to each day.

In addition to any combination of features described above, the first display area may include a second user-selectable input configured to alter the first display area to display the respective work schedule of the first robotic garden tool corresponding to different days in response to being selected via a first user input.

In addition to any combination of features described above, the plurality of user-selectable inputs may include a user-selectable "start" button, and the electronic processor may be configured to send, via the device network interface, a first command to the first robotic garden tool to start operating in response to the "start" button being selected via a first user input. In addition to any combination of features described above, he plurality of user-selectable inputs may include a user-selectable "pause" button, and the electronic processor may be configured to send, via the device network interface, a second command to the first robotic garden tool to pause operation in response to the "pause" button being selected via a second user input. In addition to any combination of features described above, the plurality of user-selectable inputs may include a user-selectable "home" button, and the electronic processor may be configured to send, via the device network interface, a third command to the first robotic garden tool to instruct the first robotic garden tool to return to a docking station in response to the "home" button being selected via a third user input.

In addition to any combination of features described above, at least one of the user-selectable inputs may not be selectable by a user at any given time based on the current status of the first robotic garden tool.

In addition to any combination of features described above, the plurality of user-selectable inputs may include a perimeter cutting option. The electronic processor may be configured to send, via the device network interface, a first command to the first robotic garden tool to include perimeter cutting during its operation in response to the perimeter cutting option being enabled via a first user input. The electronic processor may be configured to send, via the device network interface, a second command to the first robotic garden tool to cease including perimeter cutting during its operation in response to the perimeter cutting option being disabled via the first user input.

In addition to any combination of features described above, the current status of the first robotic garden tool may indicate one of a plurality of states of the first robotic garden tool as a current state of the first robotic garden tool. The current state may include one of a general operational state, a paused state, a perimeter cutting state, a docking state, a charging state, a standby state, and an error state. The current status of the first robotic garden tool may indicate whether the current state of the first robotic garden tool was entered into manually or based on a previously stored schedule.

In addition to any combination of features described above, when the current state of the first robotic garden tool was entered into manually, the plurality of user-selectable inputs may include a duration option configured to allow a user to select whether the current state of the first robotic garden tool should continue until a next scheduled operation or until further notice when another user input is received.

In addition to any combination of features described above, the second display area may include at least one of an indication of battery charge level of the first robotic garden tool and an indication of wireless communication connectivity of the first robotic garden tool.

In addition to any combination of features described above, the home screen may include a user-selectable menu. The electronic processor may be configured to display, in response to the user-selectable menu being selected, a plurality of selectable options. Each selectable option may be associated with a different robotic garden tool, and a first selectable option may be associated with the first robotic garden tool. The electronic processor may be configured to display, in response receiving a selection of the first selectable option of the plurality of selectable options, the home screen of the first robotic garden tool.

In addition to any combination of features described above, the external device may include a camera. The electronic processor may be configured to display a registration screen that indicates that the camera should be used to capture one of a bar code and a quick response (QR) code located on the first robotic garden tool. The electronic processor also may be configured to receive, from the camera, captured data corresponding to the one of the bar code and the QR code, and retrieve identification information of the first robotic garden tool from a remote database based on the captured data. The electronic processor also may be configured to register the first robotic garden tool with a first account associated with the external device using the identification information.

Another embodiment includes a method of displaying information related to a robotic garden tool. The method may include displaying, on a display of an external device, a home screen including information related to a first robotic garden tool of one or more robotic garden tools with which the external device is configured to wirelessly communicate via a device network interface of the external device. The home screen may include a first display area that includes a work overview of scheduled work to be performed by the first robotic garden tool. The home screen may also include a second display area that includes a current status of the first robotic garden tool and a plurality of user-selectable inputs configured to alter the current status of the first robotic garden tool in response to being selected via a user input.

In addition to any combination of features described above, the first display area may list a plurality of days including a current day. The first display area may list a respective work schedule of the first robotic garden tool corresponding to each day of the plurality of days. The respective work schedule may include one or more time blocks during which the first robotic garden tool one of (i) is scheduled to operate, (ii) is currently operating, or (iii) was scheduled to operate.

In addition to any combination of features described above, the current status of the first robotic garden tool may indicate one of a plurality of states of the first robotic garden tool as a current state of the first robotic garden tool. The current state may include one of a general operational state, a paused state, a perimeter cutting state, a docking state, a charging state, a standby state, and an error state. The current status of the first robotic garden tool may indicate whether the current state of the first robotic garden tool was entered into manually or based on a previously stored schedule.

Another embodiment includes a communication system that may include a first robotic garden tool and an external device. The first robotic garden tool may include a first network interface configured to allow the first robotic garden tool to wirelessly communicate with the external device. The first robotic garden tool may also include a first electronic processor coupled to the first network interface. The first electronic processor may be configured to transmit information related to the first robotic garden tool, via the first network interface, to the external device. The first electronic processor may be further configured to receive a command, via the first network interface, from the external device, and control the first robotic garden tool based on the command. The external device may include a display and a second network interface configured to allow the external device to wirelessly communicate with the first robotic garden tool. The external device may also include a second electronic processor coupled to the display and to the second network interface and configured to communicate with the first robotic garden tool via the second network interface. The second electronic processor may be configured to display a home screen on the display. The home screen may include at least a portion of the information related to the first robotic garden tool. The home screen may include a first display area that includes a work overview of scheduled work to be performed by the first robotic garden tool. The home screen may also include a second display area that includes a current status of the first robotic garden tool and a plurality of user-selectable inputs configured to alter the current status of the first robotic garden tool in response to being selected via a user input. The second electronic processor may be further configured to transmit, via the second network interface, the command to the robotic garden tool in response to receiving a user input on the external device.

In addition to any combination of features described above, the first robotic garden tool and the external device may be configured to wirelessly communicate with each other at least one of directly and indirectly via an intermediary device.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 illustrates a flowchart of a method that may be performed by the robotic garden tool and the external device of FIG. 1A to communicate with each other according to some example embodiments.
FIGS. 5A-5M illustrate screenshots of example screens/graphical user interfaces that may be displayed on a second display of the external device of FIG. 1A according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

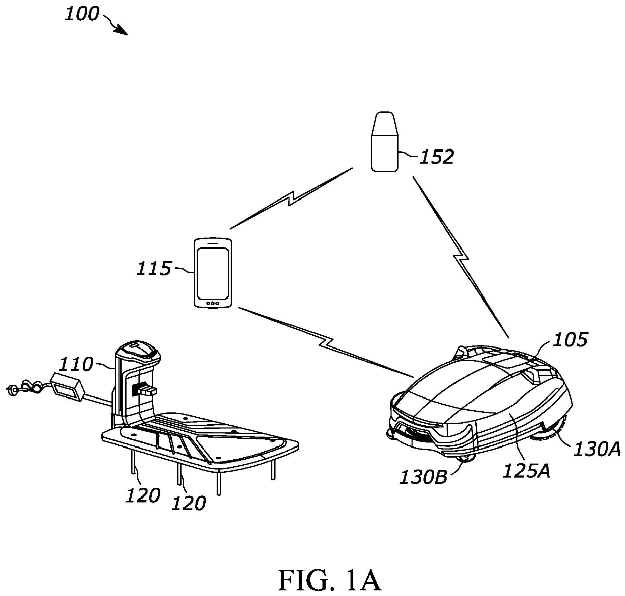

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a server 152 according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

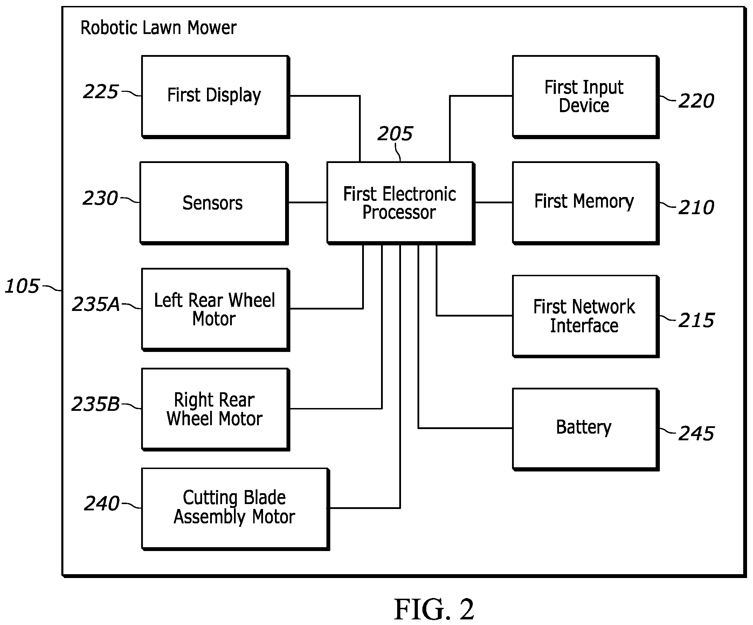

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

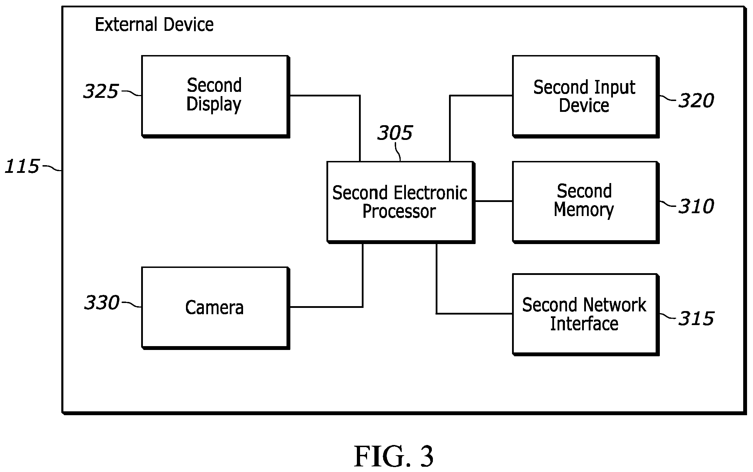

As indicated in FIG. 1A, in some embodiments, the robotic mower 105 is configured to bidirectionally wirelessly communicate with the external device 115 and/or the server 152. In some embodiments, the robotic mower 105 is configured to directly communicate with the external device 115 when the robotic mower 105 is within communication range of the external device 115 (e.g., via Bluetooth^{™}, WiFi^{™}, or the like). In some embodiments, the robotic mower 105 is additionally or alternatively configured to communicate with the external device 115 via an intermediary device such as the server 152, a cellular communication tower/base station, another device in a cellular network, or the like (e.g., when the robotic mower 105 is outside of direct communication range with the external device 115). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface on a display (e.g., second display 325 of FIG. 3) and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

While FIG. 1A illustrates one robotic mower 105, one charging station 110, and one external device 115, in some embodiments, the communication system 100 includes fewer or more devices (e.g., only a single robotic mower 105 and a single external device 115; or additional robotic mowers 105, charging stations 110, and/or external devices 115). In some embodiments, a single external device 115 may be configured to communicate with multiple robotic mowers 105 to control and/or monitor the multiple robotic mowers 105. While FIG. 1A illustrates one server 152, in some embodiments, the communication system 100 includes additional servers 152. In some embodiments, the communication system 100 may not include any servers 152. While not shown in FIG. 1A, as mentioned above, in some embodiments, the communication system 100 may include a network such as a cellular network that includes one or more devices that act as an intermediary device to allow the robotic mower 105 to bidirectionally communicate with the external device 115 when the robotic mower 105 and the external device 115 are not within direct communication range of each other.

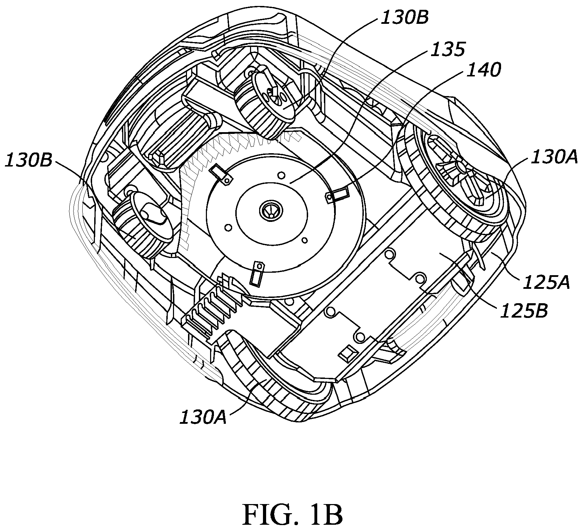

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a location tracking device (e.g., a global positioning system (GPS) receiver) and/or a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the server 152, etc.). In some embodiments, the first network interface 215 includes one or more transceivers for wirelessly communicating with the external device 115 and/or the docking station 110 (e.g., a first radio frequency (RF) transceiver configured to communicate via Bluetooth^{™}, WiFi^{™}, or the like). The first network interface 215 may include an additional transceiver for wirelessly communicating with the server 152 via, for example, cellular communication. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, a transceiver/receiver of the first network interface 215, and/or the like.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

FIG. 3 is a block diagram of the external device 115 according to some example embodiments. In the example shown, the external device 115 includes a second electronic processor 305 electrically connected to a second memory 310, a second network interface 315 (i.e., device network interface 315), a second user input device 320, a second display 325, and a camera 330. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some embodiments, the camera 330 is an optical camera configured to capture one or more images. In some embodiments, a captured image may include a bar code or a quick response (QR) code that is located on the robotic mower 105 as explained in greater detail below.

In some embodiments, the external device 115 includes fewer or additional components in configurations different from that illustrated in FIG. 3. For example, the external device 115 may include a battery, another GPS receiver, or the like. In some embodiments, the external device 115 performs functionality other than the functionality described below.

In some embodiments, the server 152 includes similar elements as at least some of the elements described above with respect to the devices 105, 115 that function in a similar manner. For example, the server 152 may include an electronic processor, a memory, and a network interface, among other elements.

In some embodiments, the robotic mower 105 travels within a virtual boundary of the operating area to execute a task (e.g., mowing a lawn). The robotic mower 105 may travel randomly within the operating area defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area defined by the virtual boundary (e.g., in adjacent rows or columns between sides of the virtual boundary) to more efficiently and evenly mow the lawn within the operating area. In such embodiments, the robotic mower 105 may determine and keep track of its current location within the operating area.

In some embodiments, the robotic mower 105 may be scheduled to operate (e.g., perform a particular task such as mowing a lawn) during certain time periods. In some embodiments, the robotic mower 105 may be manually instructed to operate at a time when the robotic mower 105 was not scheduled to operate or may be manually instructed to operate in a different manner than the manner in which the robotic mower 105 is currently scheduled to operate. For example, the robotic mower 105 may receive a command from the external device 115 that indicates that the robotic mower 105 should begin operating (e.g., mowing) or should stop operating and return to the docking station 110. Such commands may be received from the external device 115 in response to the external device 115 receiving a user input as explained in greater detail below. In some embodiments, during operation, the first electronic processor 205 of the robotic mower 105 may determine that the robotic mower 105 should return to the docking station 110. For example, the first electronic processor 205 may make such a determination in response to determining that a charge level of the battery 245 is below a predetermined threshold, in response to determining that inclement weather is occurring (e.g., based on detecting high humidity or rain, etc.), or in response to determining that a scheduled time period for operation has elapsed or is about to elapse.

As indicated by the above explanation, the robotic mower 105 may be in any one of a plurality of states at any given time. In some embodiments, the plurality of states include a general operational state, a paused state, a perimeter cutting state, a docking state, a charging state, a standby state, and an error state. Each of these states is explained below.

In some embodiments, in the general operational state, the robotic mower 105 is operating to perform a particular task within the operating area. For example, the robotic mower 105 may be mowing a lawn when the robotic mower 105 is in the general operational state.

In some embodiments, in the paused state, the robotic mower 105 has paused its operation of performing the particular task and is not engaging in any other movement or task. For example, in the paused state, the wheel motors 235 and the cutting blade assembly motor 240 may be stopped, and the robotic mower 105 may remain stationary within the operating area without performing any task. However, in the paused state, the robotic mower 105 may be ready to operate and capable of operating, for example, in response to receiving a command from the external device 115 indicating that the robotic mower 105 should continue to operate.

In some embodiments, the perimeter cutting state is similar to the general operational state but also includes the robotic mower 105 periodically engaging in perimeter cutting of a boundary/perimeter of the operating area. For example, every thirty minutes the robotic mower 105 may engage in perimeter cutting of the boundary/perimeter of the operating area and then may continue mowing the rest of the operating area. In the general operational state, the robotic mower 105 may not engage in perimeter cutting.

In some embodiments, the docking state is a state in which the robotic mower 105 is returning to the docking station 110, for example, for one of the reasons explained previously herein. In some embodiments, the cutting blade assembly motor 240 may be stopped during a portion of the docking state or during the entire docking state. In some embodiments, the cutting blade motor 240 may continue to spin to mow the lawn during a portion of the docking state.

In some embodiments, in the charging state, the robotic mower 105 is docked on the docking station 110 and is receiving charging current from the docking station 110 to charge the battery 245 of the robotic mower 105.

In some embodiments, in the standby state, the robotic mower 105 is docked on the docking station 110 but is not receiving charging current from the docking station 110. In the standby state, the battery 245 of the robotic mower 105 may be fully charged or may have a charge level above a predetermined threshold (e.g., 80%, 90%, etc.). In the standby state, the robotic mower 105 may be ready to operate, for example in response to receiving a command, in response to a scheduled operation time beginning, etc.

In some embodiments, in the error state, the electronic processor 205 has detected some sort of error and prevents the robotic mower 105 from operating or moving until the error is addressed or subsides. For example, all motors of the robotic mower 105 may be disabled and the robotic mower 105 may not be able to continue to operate until the error is addressed, for example, by a user. As another example, the cutting blade motor 240 may be disabled in the error state but the wheel motors 235 may be operable to allow the robotic mower 105 to return to the docking station 110. In this situation, the robotic mower 105 may simultaneously be in the error state and the docking state when the robotic mower 105 is moving back to docking station 110 to dock. In some embodiments, the robotic mower 105 may be in the error state while the robotic mower 105 is docked at the docking station 110 and/or when the robotic mower 105 is not docked at the docking station 110. In some embodiments, in the error state, the robotic mower 105 may not be ready/able to perform a task to enter one of the above-noted states until the error is addressed (e.g., by a user) or until the error is no longer occurring.

In some embodiments, example errors that cause the robotic mower 105 to enter the error state include one or a combination of overtemperature of a component of the robotic mower 105, overcurrent of a component of the robotic mower 105, humidity above a predetermined humidity threshold as detected by a humidity sensor of the robotic mower 105, poor weather conditions (e.g., precipitation, high winds, high temperature, etc.) detected by a sensor 230 of the robotic mower 105 or as determined based on the robotic mower 105 receiving weather information from the external device 115 or the server 152, and/or the like.

As indicated above, at any given time, the robotic mower 105 may be in one of a number of different states that may be able to change based on stored scheduling information or manual user input. Additionally, for users with more than one robotic mower 105, each robotic mower 105 may be in different operational states. Accordingly, it may be difficult for a user to keep track of a current state and scheduling information for one or more robotic mowers 105. Thus, there is a technological problem related to monitoring operation of a robotic garden tool and managing control of the robotic garden tool.

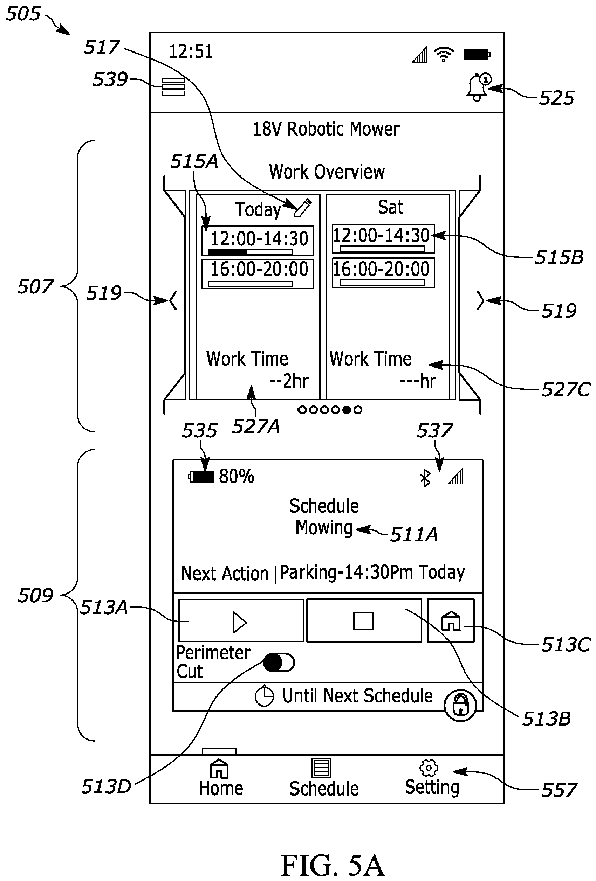

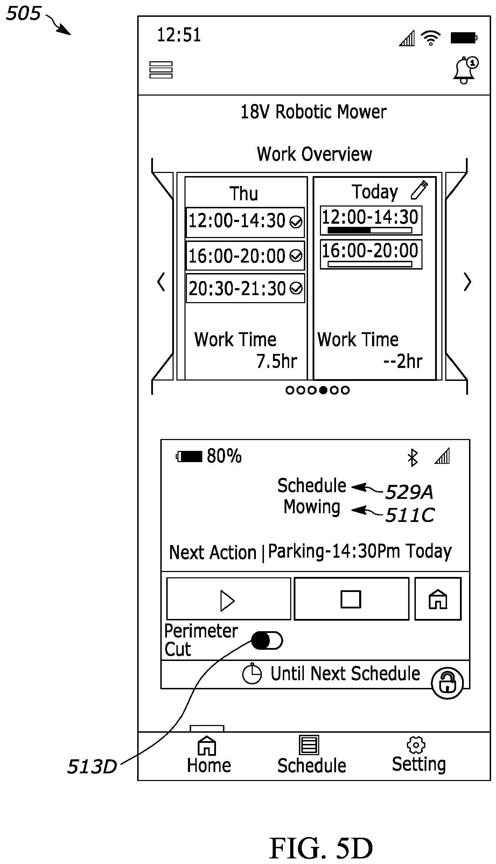

The systems, methods, and devices described herein address the above-noted technological problem by providing a user interface/screen on the second display 325 of the external device 115 to indicate various details of the robotic mower 105 to the user in an organized fashion. For example, a home screen 505 (see FIGS. 5A-5B and 5D-5J) provided on the second display 325 improves user interaction between the robotic mower 105 and the user to allow the user to more efficiently monitor and control operation of the robotic mower 105 (or multiple robotic mowers 105).

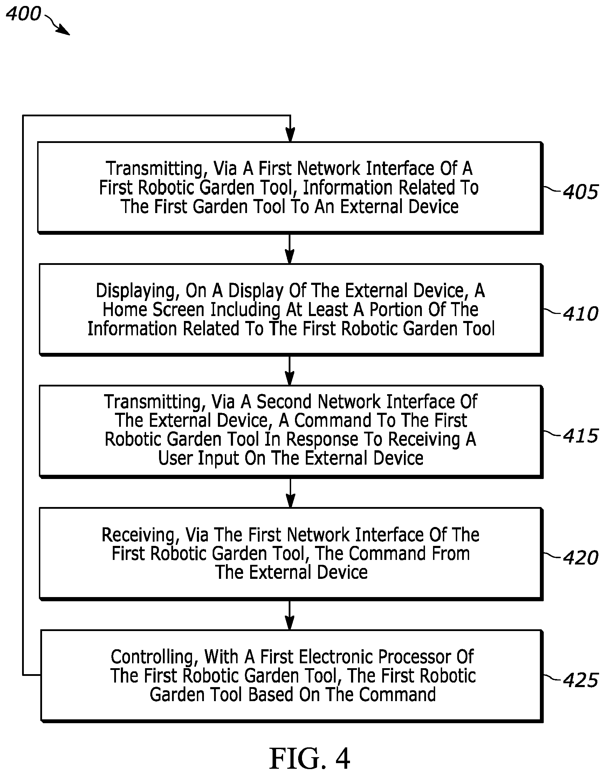

FIG. 4 illustrates a flowchart of a method 400 that may be performed by the robotic mower 105 and the external device 115 to communicate with each other. While a particular order of processing steps, signal receptions, and/or signal transmissions is indicated in FIG. 4 as an example, timing and ordering of such steps, receptions, and transmissions may vary where appropriate without negating the purpose and advantages of the examples set forth in detail throughout the remainder of this disclosure. While the method 400 includes actions performed by each of the robotic mower 105 and the external device 115, it should be understood that separate methods may be performed by only one of these devices 105, 115 where these separate methods include only the blocks executed by the respective device 105, 115.

At block 405, the first electronic processor 205 of the robotic mower 105 transmits, via the first network interface 215, information related to a first robotic garden tool 105 (e.g., the robotic mower 105) to the external device 115. For example, the information may include one or a combination of a current state of the robotic mower 105, monitored information from one or more of the sensors 230 of the robotic mower 105, scheduling information of the robotic mower 105, battery charge level information about the battery 245, wireless communication connectivity information related to wireless connections and/or wireless connection strength of the second network interface 315 with connected devices (e.g., the external device 115, the server 152, etc.), and/or other information.

At block 410, the second electronic processor 305 of the external device 115 displays, on the second display 325 of the external device 115, a home screen including at least a portion of the information related to the first robotic garden tool 105 (e.g., the robotic mower 105) that was received from the robotic mower 105. For example, FIGS. 5A-5B and 5D-5J illustrate example screenshots of a home screen 505 that are explained in further detail below.

At block 415, the second electronic processor 305 of the external device 115 transmits, via the second network interface 315 of the external device 115, a command to the first robotic garden tool 105 (e.g., the robotic mower 105) in response to receiving a user input on the external device 115. For example, when the second display 325 is a touchscreen, the user input may include a user selecting a soft button displayed on the home screen 505 (e.g., a "start" button 513A, a "pause" button 513B, a "home" button 513C, a perimeter cutting option 513D, etc.).

At block 420, the first electronic processor 205 of the robotic mower 105 receives, via the first network interface 215, the command from the external device 115. At block 425, the first electronic processor 205 of the robotic mower 105 controls the robotic garden tool 105 (e.g., the robotic mower 105) based on the command. For example, when the robotic mower 105 is in the general operational state and a "home" command is received, the robotic mower 105 may enter the docking state and begin to move toward the docking station 110 to dock. Other examples are included below with respect to FIGS. 5A-5B and 5D-5J that illustrate screenshots of screens/graphical user interfaces that are displayed on the second display 325 of the external device 115.

As indicated in FIG. 4, the method 400 may repeat to, for example, allow the external device 115 to continuously/dynamically/periodically receive status information from the robotic mower 105 and/or transmit commands to the robotic mower 105.

FIGS. 5A-5M illustrate screenshots of example screens/graphical user interfaces that may be displayed on the second display 325 of the external device 115. FIGS. 5A-5B and 5D-5J illustrate a home screen 505 in different situations that are explained below. In some embodiments, the home screen 505 includes information related to a first robotic garden tool 105 (e.g., the robotic mower 105) of a group of one or more robotic garden tools 105. As indicated previously herein, at least some of the information related to the robotic mower 105 that is displayed on the home screen 505 may be wirelessly received by the external device 115 from the robotic mower 105.

In some embodiments, the home screen 505 includes a first display area 507 that includes a work overview of scheduled work to be performed by the first robotic garden tool 105 (e.g., robotic mower 105). The first display area 507 may be referred to as a work overview display area.

In some embodiments, the home screen 505 includes a second display area 509 that includes a current status/state 511 of the first robotic garden tool 105 (i.e., robotic mower 105) and a plurality of user-selectable inputs 513 configured to alter the current status 511 of the first robotic garden tool 105 in response to being selected via a user input. The second display area 509 may be referred to as a current status display area. In some embodiments, the first display area 507 is located above the second display area 509 on the home screen 505.

In some embodiments, the first display area 507 lists a plurality of days including a current day. For example, the first display area 507 may include cards or boundaries within the first display area 507 within each of which information about the robotic mower 105 for a respective day is displayed. As shown in the example screenshot of FIG. 5A, the first display area 507 displays the current day as "TODAY" and an additional day "SAT" that is an abbreviation for Saturday. In some embodiments, the first display area 507 lists a respective work schedule 515 of the robotic mower 105 corresponding to each day of the plurality of days. In some embodiments, the respective work schedules 515 were previously programmed into the first memory 210 of the robotic mower 105, the server 152, and/or the second memory 310 of the external device 115. Accordingly, the electronic processor 305 of the external device 115 may retrieve the respective work schedules 515 from any of these devices where the work schedules 515 are stored. In some embodiments, a pen icon 517 may be displayed for a selected day. In response to receiving a user input selecting the pen icon 517, the external device 115 allows the user to edit the respective work schedule 515 for the selected day.

In some embodiments, the respective work schedule 515 includes one or more time blocks during which the robotic mower 105 one of (i) is scheduled to operate, (ii) is currently operating, or (iii) was scheduled to operate. For example, the work schedule 515A of FIG. 5A includes a first time block from 12:00 to 14:30 that indicates that the robotic mower 105 is currently operating. The first time block indicates that the robotic mower 105 is currently operating by including a progress bar that indicates the progress of the robotic mower 105 (e.g., how much time of the scheduled time block has elapsed and how much is remaining). As another example, the second time block from 16:00 to 20:00 of the work schedule 515A indicates a time block in which the robotic mower 105 is scheduled to operate in the future. The second time block indicates that the robotic mower 105 is scheduled to operate at a future time by including the time block with an empty progress bar that indicates that the time block has not yet started.

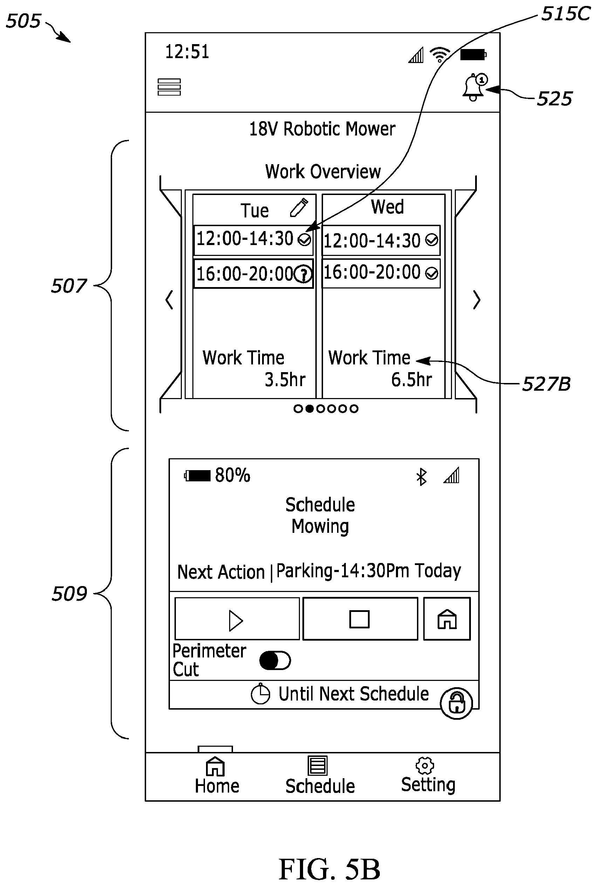

As yet another example, the home screen 505 of FIG. 5B shows past days in the first display area 507. For example, in response to receiving a user input that (i) taps a scroll carrot 519 or (ii) swipes the displayed days, the home screen 505 may display different days in the first display area 507 as shown in FIGS. 5B and 5D. In other words, the first display area 507 includes a user-selectable input (e.g., the scroll carrots 519) configured to alter the first display area 507 to display the respective work schedule 515 of the robotic mower 105 corresponding to different days in response to being selected via a user input. As shown in FIG. 5B, a work schedule 515C of a past day (TUE, which represents Tuesday) includes a third time block from 12:00 to 14:30 that indicates that the robotic mower 105 was scheduled to operate in the past during the listed time period. The third time block indicates that the robotic mower 105 was scheduled to operate in the past and, indeed, operated in the past by including a check or other icon as shown in FIG. 5B.

As shown in FIG. 5B, the work schedule 515C includes a fourth time block from 16:00 to 20:00 that is bold outlined, that is highlighted in a different color (e.g., red), and/or that includes a question mark icon. In some embodiments, these characteristics of the fourth time block indicate that the robotic mower 105 was scheduled to operate but that the scheduled operation was not executed by the robotic mower 105. In some embodiments, question mark icon may be a different type of icon (e.g., an exclamation point, etc.) that indicates that the scheduled operation was not executed. Although bold outline, highlighting a different color, and using the question mark icon are shown with respect to a past scheduled time block, similar characteristics may be used for a current scheduled time block in response to the robotic mower 105 determining that it should not operate. Additionally, similar characteristics may be predictively shown for future scheduled time blocks (e.g., due to future weather predictions) and may be dynamically updated (e.g., removed or added to specific time blocks of respective work schedules 515) as the weather predictions change.

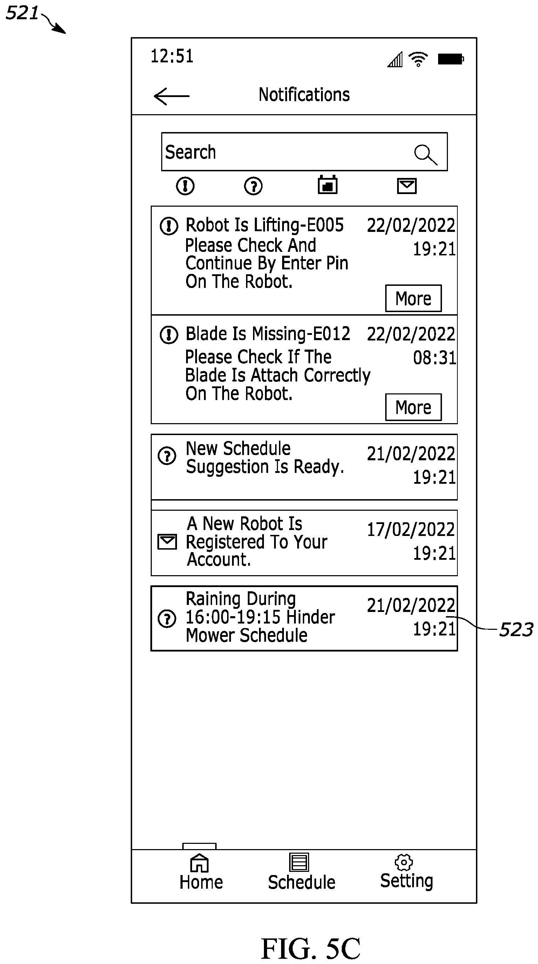

In some embodiments, in response to receiving a user input that selects the fourth time block, the external device 115 displays a notifications screen 521 as shown in FIG. 5C. In some embodiments, the notifications screen 521 displays a first notification 523 that indicates a reason why the scheduled operation of the fourth time block was not executed by the robotic mower 105. In the example shown in FIG. 5C, the robotic mower 105 did not execute the scheduled operation because the robotic mower 105 determined that it was raining during the fourth time block. Other example notifications are shown on the notification screen 521. In some embodiments, the notifications screen 521 may also be displayed in response to receiving a user input selecting a bell icon 525 shown on an upper ribbon, for example, in FIGS. 5A and 5B.

As indicated by the above explanation and as shown in FIGS. 5A-5B and 5D-5J, each time block in the respective work schedules 515 includes a status indicator (e.g., at least one of a progress bar, an icon, color-coding, bold outlining, etc.) that indicates one of (i) that future work by the robotic mower 105 is scheduled, (ii) whether current scheduled work is being performed by the robotic mower 105, and (iii) whether past scheduled work was actually performed by the robotic mower 105.

In some embodiments, the first display area 507 includes a total work time 527 of the robotic mower 105 for each day listed with respect to each day. For example, FIG. 5A shows a total work time 527A as two hours for TODAY but also includes dashes to indicate that the total work time 527A will likely change since the robotic mower 105 is currently operating and is scheduled to operate later in the same day. As another example, FIG. 5B shows a total work time 527B as 6.5 hours because the robotic mower 105 operated 6.5 hours on the past Wednesday. As another example, FIG. 5A does not show a total work time 527C yet and instead displays dashes because the displayed day (SAT, which is an abbreviation for Saturday) has not yet occurred.

Turning to the second display area 509, the plurality of user-selectable inputs 513 may be soft buttons that are displayed on home screen 505. The plurality of user-selectable inputs 513 may include a user-selectable "start" button 513A, a user-selectable "pause" button 513B, a user-selectable "home" button 513C, and a perimeter cutting option 513D. In some embodiments, the second electronic processor 305 is configured to send, via the device network interface 315, a first command to the robotic mower 105 to start operating (e.g., enter the general operational state explained previously herein) in response to the "start" button 513A being selected via a first user input. In some embodiments, the second electronic processor 305 is configured to send, via the device network interface 315, a second command to the robotic mower 105 to pause operation (e.g., enter the paused state explained previously herein) in response to the "pause" button 513B being selected via a second user input. In some embodiments, the second electronic processor 305 is configured to send, via the device network interface 315, a third command to the robotic mower 105 to instruct the robotic mower 105 to return to a docking station 110 (e.g., enter the docking state explained previously herein) in response to the "home" button 513C being selected via a third user input.

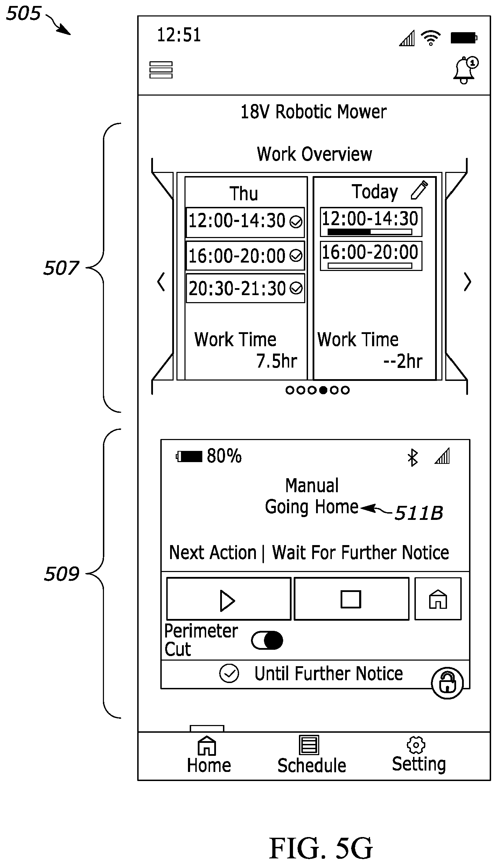

In some embodiments, at least one of the user-selectable inputs 513A, 513B, and 513C is not selectable by a user at any given time based on the current status 511 of the robotic mower 105. For example, in FIGS. 5A, 5B, and 5D, the current status 511A of the robotic mower 105 is "mowing," which indicates that the robotic mower 105 is in the general operational state. Accordingly, the "start" button 513A may be displayed in a greyed out manner to indicate that the "start" button 513A is not selectable by the user since the robotic mower 105 is already in the general operational state. As another example, in FIG. 5G, the current status 511B of the robotic mower 105 is "going home," which indicates that the robotic mower 105 is in the docking state. Accordingly, the "home" button 513C may be displayed in a greyed out manner to indicate that the "home" button 513C is not selectable by the user since the robotic mower 105 is already in the docking state.

In some embodiments, the second electronic processor 305 is configured to send, via the device network interface 315, a fourth command to the robotic mower 105 to include perimeter cutting during its operation (i.e., enter the perimeter cutting state explained previously herein) in response to the perimeter cutting option 513D being enabled via a fourth user input. Conversely, in some embodiments, the second electronic processor 305 is configured to send, via the device network interface 315, a second command to the robotic mower 105 to cease including perimeter cutting its general operation (i.e., enter the general operational state) in response to the perimeter cutting option 513D being disabled via the fourth user input.

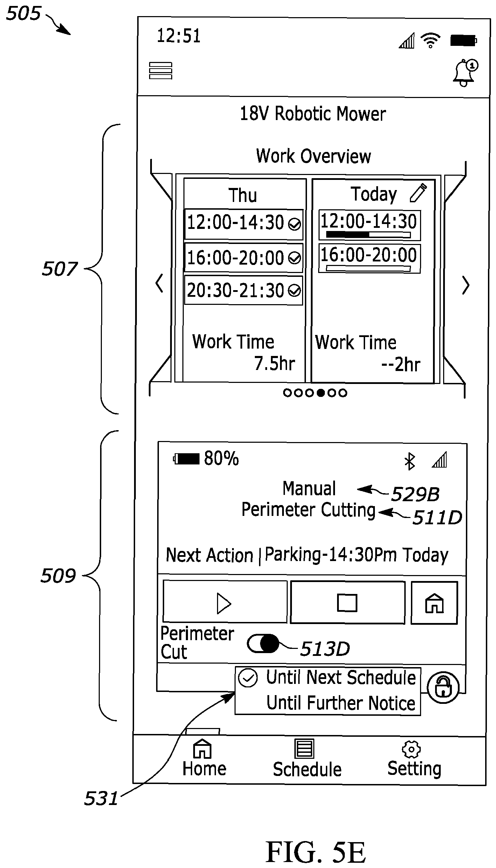

FIGS. 5D and 5E illustrate an example of the perimeter cutting option 513D being selected. As shown in FIG. 5D, the perimeter cutting option 513D is disabled and the robotic mower 105 is in the general operational state as indicated by the current status 511C of "mowing." More specifically, a sub-status 529A may also indicate whether the current status 511C of the robotic mower 105 was entered into manually (e.g., in response to user selection of one of the user-selectable inputs 513) or based on a previously stored schedule. In FIG. 5D, the sub-status 529A of "schedule" indicates that the robotic mower 105 is scheduled to be in its current status 511C.

As shown in FIG. 5E, the perimeter cutting option 513D has been enabled via user input. Accordingly, the current status 511D of the robotic mower 105 is changed to "perimeter cutting" to indicate that the robotic mower 105 is now in the perimeter cutting state. Additionally, the sub-status 529B has changed to "manual" to indicate that the current status 511C was entered into manually.

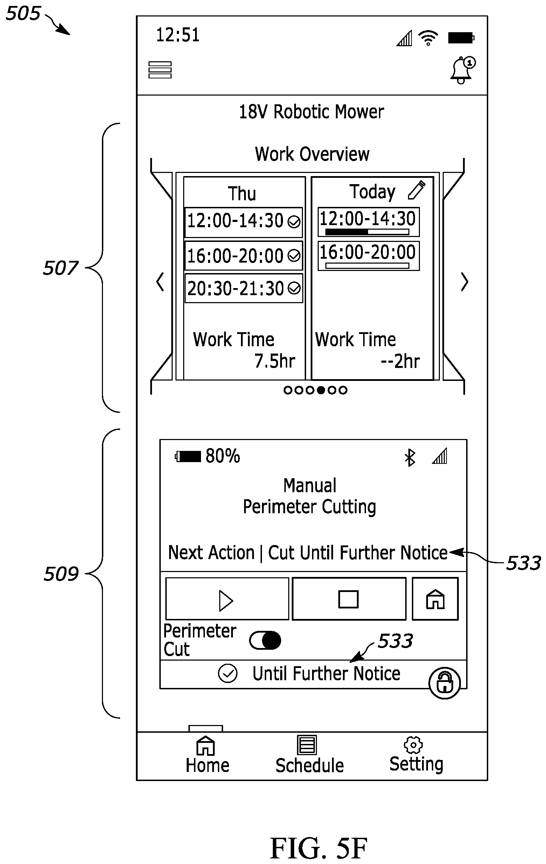

In some embodiments, in response to receiving a manual selection/user input of any of the user-selectable inputs 513, the external device 115 may display a duration option 531 configured to allow a user to select whether the current status 511 of the robotic mower 105 should continue until a next scheduled operation or until further notice (e.g., when another user input is received). As indicated in FIG. 5F, a user input was received that selected an "until further notice" option and status text 533 on the home screen 505 has been updated accordingly. Information including a selection of the duration option 531 may be transmitted to the robotic mower 105 along with the command that instructs the robotic mower 105 which operating state to enter.

FIG. 5G illustrates the home screen 505 when the current status 511 of the robotic mower 105 is "going home" (i.e., the docking state). The robotic mower 105 may have entered the docking state in response to the external device 115 receiving a user selection of the "home" button 513C or in response to otherwise determining that the robotic mower 105 should return to the docking station 110 as explained previously herein.

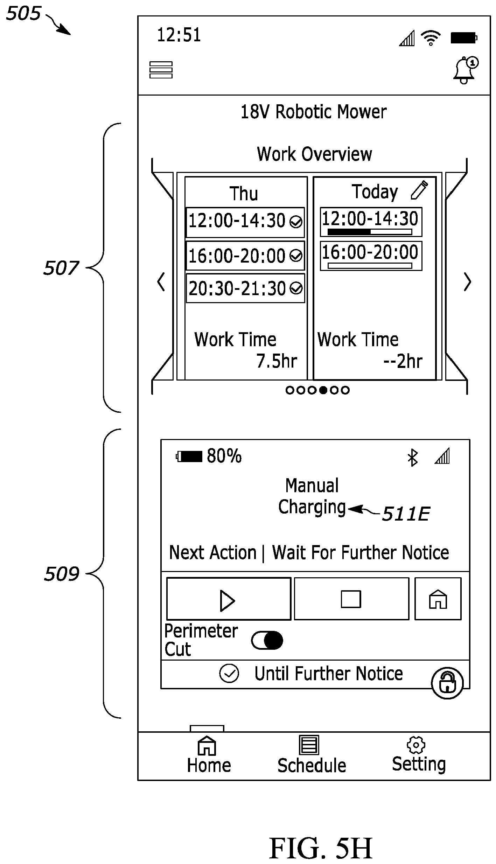

FIG. 5H illustrates the home screen 505 when the current status S 11E of the robotic mower 105 is "charging" (i.e., the charging state). When the robotic mower 105 is in the charging state, the "pause" button 513B and the "home" button 513C may be greyed out such that they are not selectable by a user since the robotic mower 105 is already docked and is not moving about the operating area.

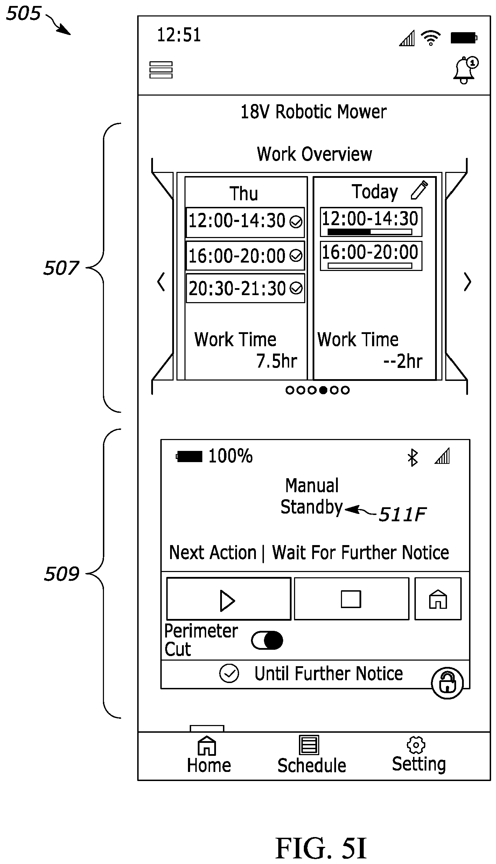

FIG. 5I illustrates the home screen 505 when the current status 511F of the robotic mower 105 is in "standby" (i.e., the standby state), which indicates that the robotic mower 105 is docked and is not charging. Similar to the charging state, when the robotic mower 105 is in the standby state, the "pause" button 513B and the "home" button 513C may be greyed out such that they are not selectable by a user since the robotic mower 105 is already docked and is not moving about the operating area.

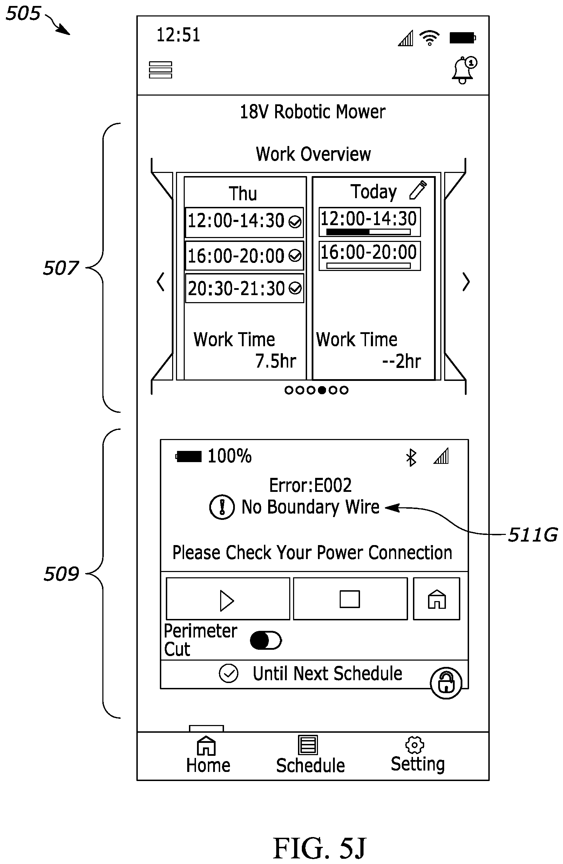

FIG. 5J illustrates the home screen 505 when the current status 511G of the robotic mower 105 is experiencing an error (i.e., the error state). In the error state, the current status 511G may indicate that the robotic mower 105 has generally detected an error and cannot operate or may indicate a specific type of error that is preventing the robotic mower 105 from operating. For example, the current status 511G of FIG. 5J indicates that the robotic mower 105 cannot sense the boundary wire. When the robotic mower 105 is in the error state, all of the user-selectable inputs 513 may be greyed out such that they are not selectable by a user since the robotic mower 105 cannot operate due to a detected error. In the error state, the robotic mower 105 may act similarly as the robotic mower 105 acts in the paused state (e.g., no movement or operation) until the error is corrected by the user.

As shown in FIGS. 5A-5B and 5D-5J, the second display area 509 includes at least one of an indication of battery charge level 535 of the robotic mower 105 and an indication of wireless communication connectivity 537 of the robotic mower 105 (e.g., see FIG. 5A). In some embodiments, the indication of the battery charge level 535 of the robotic mower 105 indicates a charge level of the battery 245 of the robotic mower 105. In some embodiments, the indication of wireless communication connectivity 537 of the robotic mower 105 indicates whether the robotic mower 105 has short-range communication connectivity (e.g., Bluetooth^{™} connectivity) with the external device 115 and/or a cellular signal strength of a cellular transceiver of the robotic mower 105. As shown in FIG. 5A, the indication of wireless communication connectivity 537 of the robotic mower 105 may include a separate icon for each of the above-noted wireless connectivity indications.

In some embodiments, any of the information displayed on the home screen 505, the notification screen 521, or any other screen of the external device 115 may be received via direct or indirect wireless communication from the robotic mower 105. Additionally, any user inputs that select certain operational states and/or operational characteristics of the robotic mower 105 may be transmitted in commands to the robotic mower 105 from the external device 115.

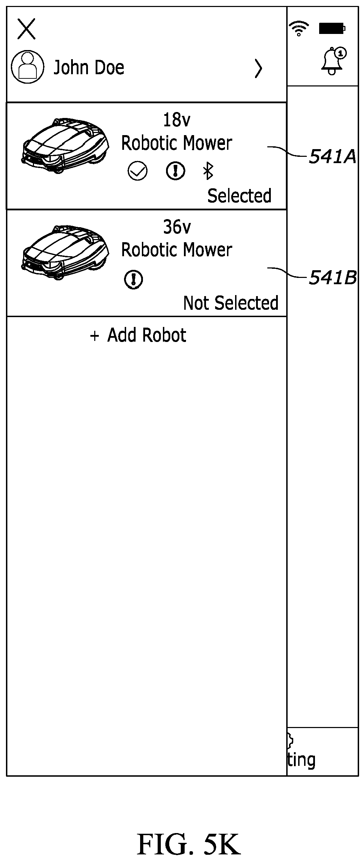

In some embodiments, the home screen 505 (e.g., a top ribbon on the home screen 505) includes a user-selectable menu 539 (see FIG. 5A). In some embodiments, the second electronic processor 305 is configured to display, in response to the user-selectable menu 539 being selected via a user input, a plurality of selectable options 541 as shown in FIG. 5K. Each selectable option 541 may be associated with a different robotic garden tool 105. In some embodiments, a first selectable option 541A is associated with the first robotic garden tool 105 (e.g., the robotic mower 105). The second electronic processor 305 may be configured to display, in response receiving a selection of the first selectable option 541A of the plurality of selectable options, the home screen 505 of the first robotic garden tool (e.g., the robotic mower 105). The second electronic processor 305 may also be configured to display home screens 505 of other robotic garden tools 105 in response to the other selectable options 541 of other robotic garden tools 105 being selected. Accordingly, a user (e.g., John Doe) with more than one robotic mower 105 may individually monitor and/or control their robotic mowers 105 from a single external device 115.

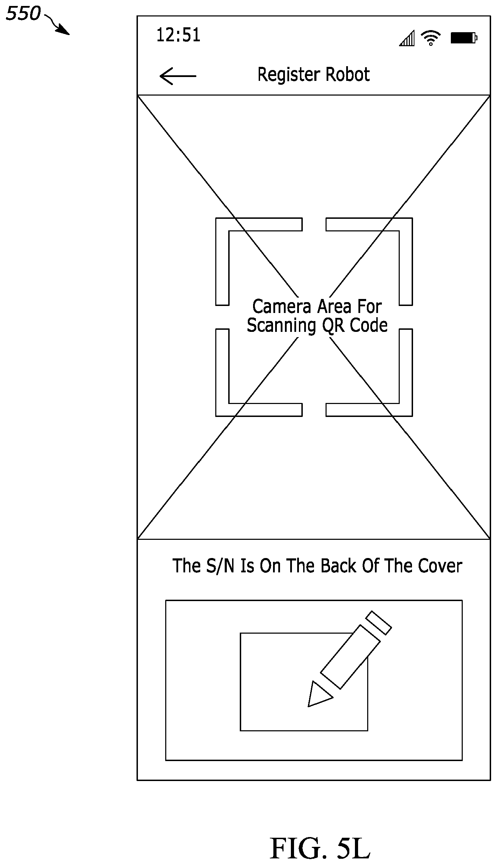

As shown in FIG. 5L, in some embodiments, the second electronic processor 305 is configured to display a registration screen 550 that indicates that the camera 330 of the external device 115 should be used to capture one of a bar code and a quick response (QR) code located on the robotic mower 105. The electronic processor 305 may also be configured to receive, from the camera 330, captured data corresponding to the one of the bar code and the QR code. The electronic processor 305 may also be configured to retrieve identification information of the robotic mower 105 from a remote database (e.g., the server 152) based on the captured data. For example, the external device 115 may use a unique identifier of the bar code or QR code to retrieve identification information of the robotic mower 105 that was stored on the server 152 during manufacturing of the robotic mower 105. The electronic processor 305 may also be configured to register the robotic mower 105 with a first account associated with the external device 115 (e.g., the user's account) using the identification information. For example, information regarding a purchaser of the robotic mower 105 may also be stored in the server 152 upon purchase of the robotic mower 105. A user may enter information into the external device 115, and if the entered information and the unique identifier from the bar code or QR code match the stored information in the server 152, the server 152 may register the robotic mower 105 with the user and/or the user's account such that only an external device 115 associated with the associated user and/or account may monitor and/or control the robotic mower 105 using the external device 115.

FIGS. 5A-5B and 5D-5J do not include reference numbers for every instance of every element. However, it should be apparent from the similarities between these figures that many unlabeled elements correspond to labeled elements of other figures. For example, the current status 511 is not labeled in FIG. 5B, but it is apparent that the current status 511 shown on the home screen 505 of FIG. 5B is "mowing" (i.e., the general operational state).

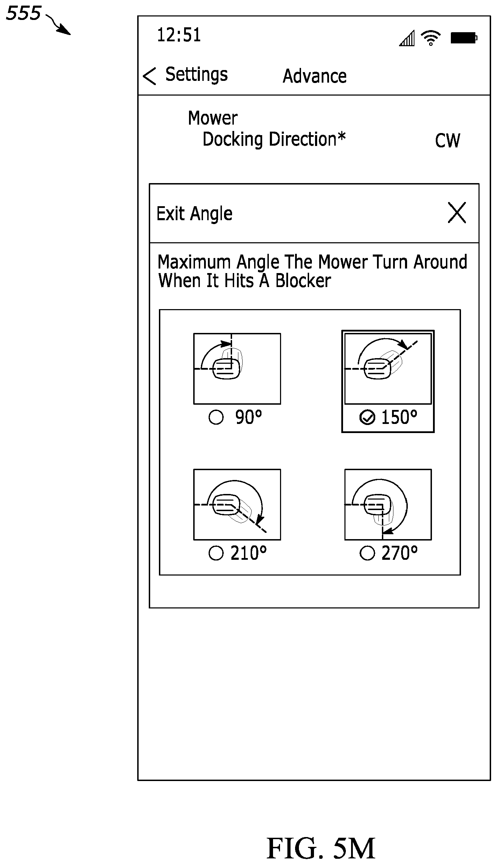

FIG. 5M illustrates a settings screen 555 that may be displayed in response to a selection of one of a plurality of options that is displayed in response to a selection of a settings menu 557 on a lower ribbon of the home screen 505 (see FIG. 5A). As indicated in FIG. 5M, a user may select a maximum angle that the robotic mower 105 will randomly turn when the robotic mower 105 encounters, for example, the boundary wire and/or an obstacle. The maximum angle may be selected from among multiple pre-set values as shown in FIG. 5M. In other embodiments, the maximum value may be entered in text by a user. Once selected, the selected maximum angle is transmitted to the robotic mower 105 to be implemented by the robotic mower 105.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. An external device comprising:
a display;
a device network interface configured to allow the external device to wirelessly communicate with one or more robotic garden tools; and
an electronic processor coupled to the display and to the device network interface and configured to communicate with the one or more robotic garden tools via the device network interface, the electronic processor configured to
display a home screen on the display, wherein the home screen includes information related to a first robotic garden tool of the one or more robotic garden tools,
wherein the home screen includes a first display area that includes a work overview of scheduled work to be performed by the first robotic garden tool,
wherein the home screen includes a second display area that includes a current status of the first robotic garden tool and a plurality of user-selectable inputs configured to alter the current status of the first robotic garden tool in response to being selected via a user input.

2. The external device of claim 1, wherein the first display area is located above the second display area.

3. The external device of claim 1, wherein the first display area lists a plurality of days including a current day; and
wherein the first display area lists a respective work schedule of the first robotic garden tool corresponding to each day of the plurality of days.

4. The external device of claim 3, wherein the respective work schedule includes one or more time blocks during which the first robotic garden tool one of (i) is scheduled to operate, (ii) is currently operating, or (iii) was scheduled to operate;
and optionally
wherein each time block includes a status indicator that indicates one of (i) that future work by the first robotic garden tool is scheduled, (ii) whether current scheduled work is being performed by the first robotic garden tool, and (iii) whether past scheduled work was actually performed by the first robotic garden tool.

5. The external device of claim 3, wherein a total work time of the first robotic garden tool for each day is listed with respect to each day;
and optionally
wherein the first display area includes a second user-selectable input configured to alter the first display area to display the respective work schedule of the first robotic garden tool corresponding to different days in response to being selected via a first user input.

6. The external device of claim 1, wherein the plurality of user-selectable inputs includes a user-selectable "start" button, and wherein the electronic processor is configured to send, via the device network interface, a first command to the first robotic garden tool to start operating in response to the "start" button being selected via a first user input;
wherein the plurality of user-selectable inputs includes a user-selectable "pause" button, and wherein the electronic processor is configured to send, via the device network interface, a second command to the first robotic garden tool to pause operation in response to the "pause" button being selected via a second user input; and
wherein the plurality of user-selectable inputs includes a user-selectable "home" button, and wherein the electronic processor is configured to send, via the device network interface, a third command to the first robotic garden tool to instruct the first robotic garden tool to return to a docking station in response to the "home" button being selected via a third user input;
and optionally
wherein at least one of the user-selectable inputs is not selectable by a user at any given time based on the current status of the first robotic garden tool.

7. The external device of claim 1, wherein the plurality of user-selectable inputs includes a perimeter cutting option;
wherein the electronic processor is configured to send, via the device network interface, a first command to the first robotic garden tool to include perimeter cutting during its operation in response to the perimeter cutting option being enabled via a first user input; and
wherein the electronic processor is configured to send, via the device network interface, a second command to the first robotic garden tool to cease including perimeter cutting during its operation in response to the perimeter cutting option being disabled via the first user input.

8. The external device of claim 1, wherein the current status of the first robotic garden tool indicates one of a plurality of states of the first robotic garden tool as a current state of the first robotic garden tool, wherein the current state includes one of a general operational state, a paused state, a perimeter cutting state, a docking state, a charging state, a standby state, and an error state; and
wherein the current status of the first robotic garden tool indicates whether the current state of the first robotic garden tool was entered into manually or based on a previously stored schedule;
and optionally
wherein when the current state of the first robotic garden tool was entered into manually, the plurality of user-selectable inputs includes a duration option configured to allow a user to select whether the current state of the first robotic garden tool should continue until a next scheduled operation or until further notice when another user input is received.

9. The external device of claim 1, wherein the second display area includes at least one of an indication of battery charge level of the first robotic garden tool and an indication of wireless communication connectivity of the first robotic garden tool.

10. The external device of claim 1, wherein the home screen includes a user-selectable menu;
wherein the electronic processor is configured to display, in response to the user-selectable menu being selected, a plurality of selectable options, wherein each selectable option is associated with a different robotic garden tool, and wherein a first selectable option is associated with the first robotic garden tool; and
wherein the electronic processor is configured to display, in response receiving a selection of the first selectable option of the plurality of selectable options, the home screen of the first robotic garden tool.

11. The external device of claim 1, further comprising a camera;
wherein the electronic processor is configured to
display a registration screen that indicates that the camera should be used to capture one of a bar code and a quick response (QR) code located on the first robotic garden tool,
receive, from the camera, captured data corresponding to the one of the bar code and the QR code,
retrieve identification information of the first robotic garden tool from a remote database based on the captured data, and
register the first robotic garden tool with a first account associated with the external device using the identification information.

12. A method of displaying information related to a robotic garden tool, the method comprising:
displaying, on a display of an external device, a home screen including information related to a first robotic garden tool of one or more robotic garden tools with which the external device is configured to wirelessly communicate via a device network interface of the external device;
wherein the home screen includes a first display area that includes a work overview of scheduled work to be performed by the first robotic garden tool; and
wherein the home screen includes a second display area that includes a current status of the first robotic garden tool and a plurality of user-selectable inputs configured to alter the current status of the first robotic garden tool in response to being selected via a user input.

13. The method of claim 12, wherein the first display area lists a plurality of days including a current day;
wherein the first display area lists a respective work schedule of the first robotic garden tool corresponding to each day of the plurality of days; and
wherein the respective work schedule includes one or more time blocks during which the first robotic garden tool one of (i) is scheduled to operate, (ii) is currently operating, or (iii) was scheduled to operate.

14. The method of claim 12, wherein the current status of the first robotic garden tool indicates one of a plurality of states of the first robotic garden tool as a current state of the first robotic garden tool, wherein the current state includes one of a general operational state, a paused state, a perimeter cutting state, a docking state, a charging state, a standby state, and an error state; and
wherein the current status of the first robotic garden tool indicates whether the current state of the first robotic garden tool was entered into manually or based on a previously stored schedule.

15. A communication system comprising:
a first robotic garden tool including
a first network interface configured to allow the first robotic garden tool to wirelessly communicate with an external device,
a first electronic processor coupled to the first network interface and configured to
transmit information related to the first robotic garden tool, via the first network interface, to the external device,
receive a command, via the first network interface, from the external device, and
control the first robotic garden tool based on the command; and
the external device including
a display;
a second network interface configured to allow the external device to wirelessly communicate with the first robotic garden tool; and
a second electronic processor coupled to the display and to the second network interface and configured to communicate with the first robotic garden tool via the second network interface, the second electronic processor configured to
display a home screen on the display, wherein the home screen includes at least a portion of the information related to the first robotic garden tool,
wherein the home screen includes a first display area that includes a work overview of scheduled work to be performed by the first robotic garden tool, and
wherein the home screen includes a second display area that includes a current status of the first robotic garden tool and a plurality of user-selectable inputs configured to alter the current status of the first robotic garden tool in response to being selected via a user input, and
transmit, via the second network interface, the command to the robotic garden tool in response to receiving a user input on the external device;
and optionally
wherein the first robotic garden tool and the external device are configured to wirelessly communicate with each other at least one of directly and indirectly via an intermediary device.
